# EUROPEAN PATENT APPLICATION

(11) **EP 4 610 053 A1**
(43) Date of publication of application: **03.09.2025**
(21) Application number: 25160207.4
(22) Date of filing: 26.02.2025
(51) Int. Cl.: B41J 2/325, B41J 2/21, B41J 11/00, B41J 11/04, B41J 25/304, B41M 7/00

(54) **PRINTING APPARATUS, CONTROL METHOD, STORAGE MEDIUM AND PROGRAM**

(30) Priority: 27.02.2024 JP 2024027867
(71) Applicant: CANON KABUSHIKI KAISHA, Tokyo 146-8501 (JP)
(72) Inventor: YANO, Yukiteru, Tokyo 146-8501 (JP)
(74) Representative: TBK

(57) **Abstract**

A printing apparatus (1) that thermally transfers color ink (26a, 26b, 27c) and an overcoat (26d) to a recording sheet (18), includes a control unit (104) configured to perform print processing (S101 - S119) of transferring the color ink and the overcoat to the recording sheet by a thermal head (21) and an ink ribbon (26). The control unit changes a pressing force for pressing the ink ribbon and the recording sheet during the color ink transfer and during the overcoat transfer in the print processing, and controls a processing speed during the color ink transfer and during the overcoat transfer in the print processing.

## Description

### BACKGROUND OF THE INVENTION

### Field of the Invention

The present invention relates to a thermal transfer printing apparatus.

### Description of the Related Art

In recent years, printing apparatuses that can readily print, as a photo, image data captured by a digital camera, a smartphone, or the like are currently widespread. One of these printing apparatuses is a sublimation type thermal transfer printer. The sublimation type adopts a thermal transfer method of adhering, to a recording sheet, ink vaporized by heat of a thermal head. When performing full-color printing, color ink transfer processing of forming a full-color image by superimposing color inks of yellow (Y), magenta (M), and cyan (C) sequentially applied to an ink ribbon and OC transfer processing of transferring an overcoat (OC) onto an image are performed.

The color ink and the overcoat are different in a heat amount applied to the thermal head to vaporize the color ink and OC but are set with the same condition with respect to the pressing force of the ink ribbon and the recording sheet. Japanese Patent No. 5962417 describes that the pressing force and the position of a thermal head are adjusted based on a combination of an ink ribbon and a recording sheet.

Japanese Patent No. 5962417 does not consider that the pressing force and the position of the thermal head are adjusted during color ink transfer and during OC transfer in print processing. In addition, when the processing speed during OC transfer is increased, abnormal noise is generated by excessive friction caused by pressing the ink ribbon and the recording sheet or resonance at the time of separation, thereby restricting the print processing speed.

### SUMMARY OF THE INVENTION

The present invention has been made in consideration of the aforementioned problems, and realizes techniques of speeding up print processing by setting, to optimum conditions, the processing speed and the pressing state of an ink ribbon and a recording sheet during color ink transfer and during overcoat transfer.

In order to solve the aforementioned problems, the present invention provides a printing apparatus as specified in claims 1 to 10.

In order to solve the aforementioned problems, the present invention provides a control method of a printing apparatus as specified in claim 11.

In order to solve the aforementioned problems, the present invention provides a computer-readable storage medium as specified in claim 12.

In order to solve the aforementioned problems, the present invention provides a program as specified in claim 13.

According to the present invention, it is possible to speed up print processing by setting, to optimum conditions, the processing speed and the pressing state of an ink ribbon and a recording sheet during color ink transfer and during overcoat transfer.

Further features of the present invention will become apparent from the following description of exemplary embodiments (with reference to the attached drawings).

### BRIEF DESCRIPTION OF THE DRAWINGS

Fig. 1 is a sectional view illustrating the internal mechanical configuration of a printing apparatus during color ink transfer according to a present embodiment.
Fig. 2 is a sectional view illustrating the internal mechanical configuration of the printing apparatus during overcoat (OC) transfer according to the present embodiment.
Fig. 3 is a block diagram illustrating the control configuration of the printing apparatus according to the present embodiment.
Fig. 4 is a developed view of an ink ribbon according to the present embodiment.
Fig. 5 is a perspective view illustrating the moving mechanism of a thermal head according to the present embodiment.
Fig. 6 is a flowchart illustrating print processing in a non-high-speed mode of a printing apparatus according to a first embodiment.
Fig. 7 is a flowchart illustrating print processing in a high-speed mode of the printing apparatus according to the first embodiment.
Figs. 8A and 8B are side views respectively illustrating the moving mechanism of the thermal head in a first pressing state and a second pressing state according to the present embodiment.
Fig. 9 is a view illustrating a semi-glossy pattern formed in a pattern OC mode of a printing apparatus according to a second embodiment.
Fig. 10 is a flowchart illustrating print processing in a non-pattern OC mode of the printing apparatus according to the second embodiment.
Fig. 11 is a flowchart illustrating print processing in a pattern OC mode of the printing apparatus according to the second embodiment.

### DESCRIPTION OF THE EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

An example in which the printing apparatus is applied in a thermal printer that uses thermal transfer or dye sublimation will be described hereinafter. However, the present invention is not limited to a thermal printer, and can be applied in other types of printers as well.

Additionally, the present invention is not limited to a printer alone, and can be applied in any device having a printing function, such as a copier, a facsimile device, a computer system, or the like. "Recording sheet" according to the present invention includes not only paper material, but also sheet materials made from other types of material, such as plastic film or the like.

In a thermal printer, an ink ribbon to which ink is applied (an ink sheet) and recording sheet are pressurized by a thermal head (a print head) and a platen roller (a receiving member), and printing is performed by conveying the ink ribbon and the recording sheet (print sheet) in a state of contact with the thermal head. A plurality of thermal elements (resistance elements) are disposed in a line shape in the thermal head, and image forming is performed on the recording sheet by selectively electrifying the heating elements so as to transfer the ink from the ink ribbon onto the recording sheet. In particular, when printing in full color, yellow (Y), magenta (M), and cyan (C) inks, which are applied to the ink ribbon in order, are superimposed on each other in that order to form a full-color image, and an overcoat (OC) is also transferred onto the image.

In the following descriptions, "printing" is assumed to refer to an overall series of operations, from printing on the basis of a printing instruction from a user, to discharging a recording sheet onto which an image has been formed. An "image forming" is assumed to refer to an operation, among the printing operations, of forming an image on the recording sheet by thermally transferring ink from the ink ribbon onto the recording sheet. Note that with monochromatic printing, the recording sheet may be in the form of a roll, and may be discharged after being cut to a predetermined size after image forming is performed.

### [FIRST EMBODIMENT]

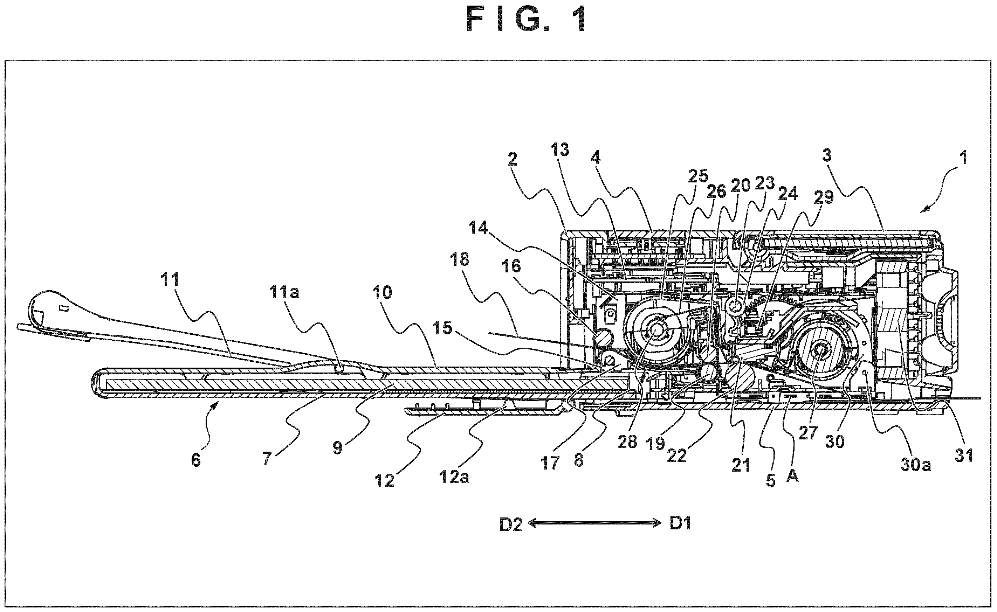

First, the first embodiment will be described with reference to Figs. 1 to 8B.

In addition to a normal mode of performing image forming at a first speed, a thermal printer according to the first embodiment has a high-speed mode of performing image forming at a second speed higher than the first speed.

Fig. 1 is a sectional view of the thermal printer during color ink transfer according to the present embodiment.

The configuration and function of the thermal printer according to the present embodiment will be described first with reference to Fig. 1.

A thermal printer 1 according to the present embodiment includes an upper case 2 and a lower case 5 as exterior members that respectively cover the upper side and the lower side of the printer main body. The driving portion of the printer is incorporated in a box-shaped housing formed by the upper case 2 and the lower case 5. A display unit 3 and an operation unit 4 are provided in the upper case 2.

A sheet tray 6 can store a plurality of recording sheets 9 stacked on each other. The sheet tray 6 is set in the thermal printer 1 by inserting part of an edge portion on a side of a sheet conveyance direction D1 into an opening formed on one side surface of the thermal printer 1.

The sheet tray 6 includes a storing portion 7 that stores the plurality of recording sheets (sheet bundle) 9. A lift plate 8 is engaged with the bottom surface of the storing portion 7. The sheet bundle is stacked on the upper surface of the lift plate 8.

A sheet supply opening for supplying an image forming recording sheet 18 is formed in an edge portion of the storing portion 7 on the side of the sheet conveyance direction D1. The sheet supply opening has a function of supplying, to a sheet conveyance path in the thermal printer 1, the image forming recording sheet 18 on the uppermost surface of the sheet bundle 9 in the storing portion 7. A portion, except for the sheet supply opening, of the uppermost surface of the sheet bundle 9 stacked in the storing portion 7 is covered with a tray inner lid 10. A tray upper lid 11 is attached to a portion near the center of the tray inner lid 10 in the sheet conveyance direction D1 and a sheet conveyance direction D2. The tray upper lid 11 is pivotably supported by rotating shaft portions 11a on both sides of the tray inner lid 10 in a width direction orthogonal to the sheet conveyance directions D1 and D2. The rotating shaft portions 11a are pivotally attached to holes formed on both sides of the tray inner lid 10, respectively. The tray upper lid 11 is held in a posture shown in Fig. 1 at the time of print processing and has a function of receiving the image-formed recording sheet 18 to be discharged outside the thermal printer 1.

A sheet supply/discharge opening for attaching the sheet tray 6 to the thermal printer 1 is formed on the side surface of the exterior member of the thermal printer 1 on the side of the sheet conveyance direction D1. The sheet supply/discharge opening has a function of supplying the image forming recording sheet 18 on the uppermost surface of the sheet bundle 9 in the storing portion 7 to the sheet conveyance path in the thermal printer 1 and a function of discharging the image-formed recording sheet 18 outside the thermal printer 1.

A door 12 opens/closes the sheet supply/discharge opening. In a use state in which the sheet tray 6 is attached to the thermal printer 1, the door 12 opens the sheet supply/discharge opening to allow the sheet tray 6 to be attached to the thermal printer 1. In a non-use state in which the sheet tray 6 is not attached to the thermal printer 1, the door 12 closes the sheet supply/discharge opening to protect the inside of the thermal printer 1 against dust.

The door 12 is axially supported by the edge portion of the lower case 5 in the sheet conveyance direction D2 to be pivotable. In the door 12, a projecting portion 12a is formed on a side surface facing the upper case 2 in a state in which the sheet supply/discharge opening is closed. The door 12 is substantially flush with the lower case 5 in a state in which the sheet supply/discharge opening is open, and is held in a predetermined posture in a state in which the bottom surface of the storing portion 7 of the sheet tray 6 abuts against the projecting portion 12a and the sheet tray 6 is attached to the thermal printer 1.

A substrate 13 is arranged in an upper portion inside the thermal printer 1. The substrate 13 is supported by an engine frame 14 that supports a printing mechanism (printer engine) in the thermal printer 1. On the substrate 13, the driving circuits of various motors, the driving circuit of a thermal head 21, an image processing circuit, a power supply circuit, the driving circuit of the display unit 3, the switch circuit of the operation unit 4, an input/output circuit, and the like are mounted.

A supply/discharge roller 15 supplies the image forming recording sheet 18 into the thermal printer 1, and discharges the image-formed recording sheet 18 outside the thermal printer 1. The supply/discharge roller 15 has a function as a pickup roller that picks up the image forming recording sheet 18 on the uppermost surface of the sheet bundle 9 on the sheet tray 6 and supplies it into the thermal printer 1, and a function as a discharge roller that discharges the image-formed recording sheet 18 from the sheet conveyance path to the outside of the thermal printer 1. The supply/discharge roller 15 rotates in the sheet conveyance direction D1 in a state in which the sheet bundle 9 is lifted up by the lift plate 8 and the recording sheet 18 on the uppermost surface of the sheet bundle 9 is pressed against the supply/discharge roller 15, thereby picking up the recording sheet 18 on the uppermost surface of the sheet bundle 9 on the sheet tray 6 and supplying it into the thermal printer 1. Furthermore, the supply/discharge roller 15 rotates in the sheet conveyance direction D2 in a state in which the image-formed recording sheet 18 is nipped between the supply/discharge roller 15 and a sub-roller 16 abutting against the supply/discharge roller 15, thereby discharging the image-formed recording sheet 18 outside the thermal printer 1.

A sheet guide 17 is pivotably supported by the supply/discharge roller 15. The state of the sheet guide 17 can be switched so as to form a sheet conveyance path at the time of supplying the image forming recording sheet 18 and a sheet conveyance path at a time other than the time of supplying the recording sheet 18, including the time of discharging the image-formed recording sheet 18.

The image forming recording sheet 18 picked up from the sheet tray 6 and supplied into the thermal printer 1 is guided by the sheet guide 17 to a position at which the recording sheet 18 is nipped by a sheet conveyance roller 19 and a pinch roller 20.

A fine protruding claw is formed on the surface of the sheet conveyance roller 19. The pinch roller 20 presses the recording sheet 18 against the sheet conveyance roller 19, and the protruding claw engages with the back surface of the recording sheet 18, thereby making it possible to strongly grip the recording sheet 18 to repeatedly perform accurate conveyance without slipping or displacement.

The thermal head 21 transfers the color inks to the recording sheet 18 with a platen roller 22. In order for the thermal head 21 to uniformly press the recording sheet 18 to transfer the color inks to the recording sheet 18, the platen roller 22 receives the recording sheet 18 while elastically deforming the recording sheet 18, and smoothly rotates to convey the recording sheet 18.

A head driving lever 24 is fit in a lever pivot shaft 23. The head driving lever 24 pivots about the lever pivot shaft 23 to move the thermal head 21 up and down or press the thermal head 21 against the platen roller 22.

An ink ribbon cassette 25 stores an ink ribbon 26 in a state in which part of the ink ribbon 26 is exposed. The ink ribbon cassette 25 includes a supply bobbin 27 that feeds the ink ribbon 26, and a winding bobbin 28 that winds the ink ribbon 26 fed from the supply bobbin 27. The ink ribbon 26 is wound by the supply bobbin 27 in a roll, one end of the ink ribbon 26 is fixed to the winding bobbin 28, and then the ink ribbon 26 fed from the supply bobbin 27 in print processing is wound by the winding bobbin 28.

A head pressing spring 29 is pressed by the pivot of the lever pivot shaft 23, thereby pressing the thermal head 21 against the ink ribbon 26, the recording sheet 18, and the platen roller 22. A head arm 30 supports both sides of the thermal head 21 in the width direction orthogonal to the sheet conveyance directions D1 and D2. The head arm 30 is supported by the engine frame 14 to be pivotable about a pivot shaft hole 30a. When the head arm 30 pivots about the pivot shaft hole 30a, the thermal head 21 can move between a pressing position at which the ink ribbon 26 and the recording sheet 18 are pressed against the platen roller 22 and a retreat position at which the ink ribbon 26 and the recording sheet 18 are not pressed against the platen roller 22.

A fan motor 31 cools the inside of the thermal printer 1 by releasing, outside the thermal printer 1, air in the thermal printer 1 heated by the circuits mounted on the substrate 13 and the thermal head 21.

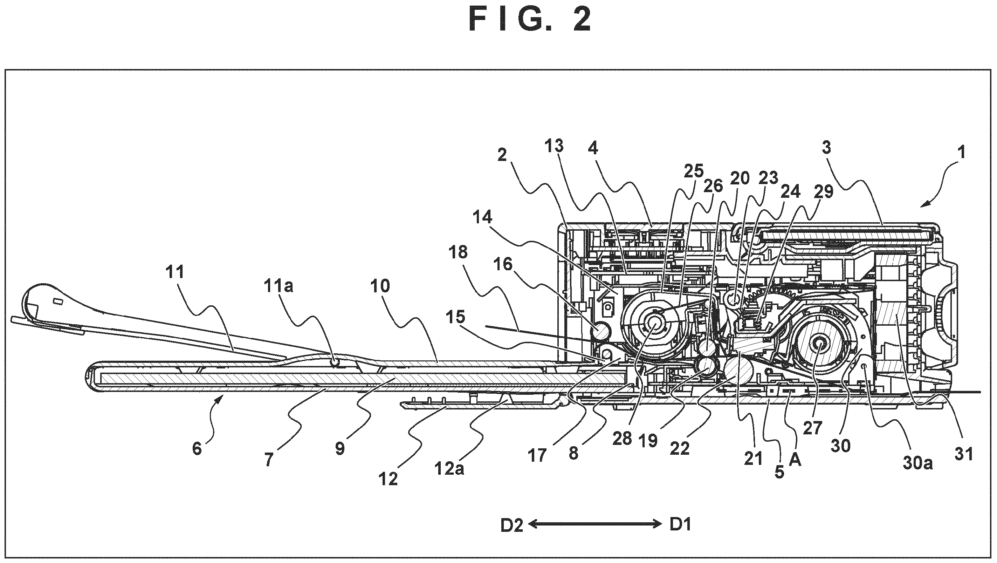

Fig. 2 is a sectional view of the thermal printer during overcoat transfer according to the present embodiment. The same reference numerals as in Fig. 1 denote the same components.

Figs. 1 and 2 are different in terms of a portion of region A surrounded by alternate long and short dashed lines. The portion of region A in each of Figs. 1 and 2 includes the moving mechanism of the thermal head 21. Each of Figs. 1 and 2 shows a state in which the thermal head 21 presses the ink ribbon 26 and the recording sheet 18 against the platen roller 22. The states shown in Figs. 1 and 2 are different in terms of the rotation angle of the lever pivot shaft 23, and the lever pivot shaft 23 shown in Fig. 1 pivots in the clockwise direction more than in the state shown in Fig. 2. Thus, the head driving lever 24 shown in Fig. 1 presses the head arm 30 against the platen roller 22 more than in the state shown in Fig. 2. Therefore, the head pressing spring 29 shown in Fig. 1 is compressed more than in the state shown in Fig. 2, and the thermal head 21 applies, to the ink ribbon 26 and the recording sheet 18, a pressing force larger than in the state shown in Fig. 2. That is, in the present embodiment, the pressing force applied to the ink ribbon 26 and the recording sheet 18 by the thermal head 21 during the color ink transfer in Fig. 1 is larger than the pressing force applied to the ink ribbon 26 and the recording sheet 18 by the thermal head 21 during the OC transfer in Fig. 2.

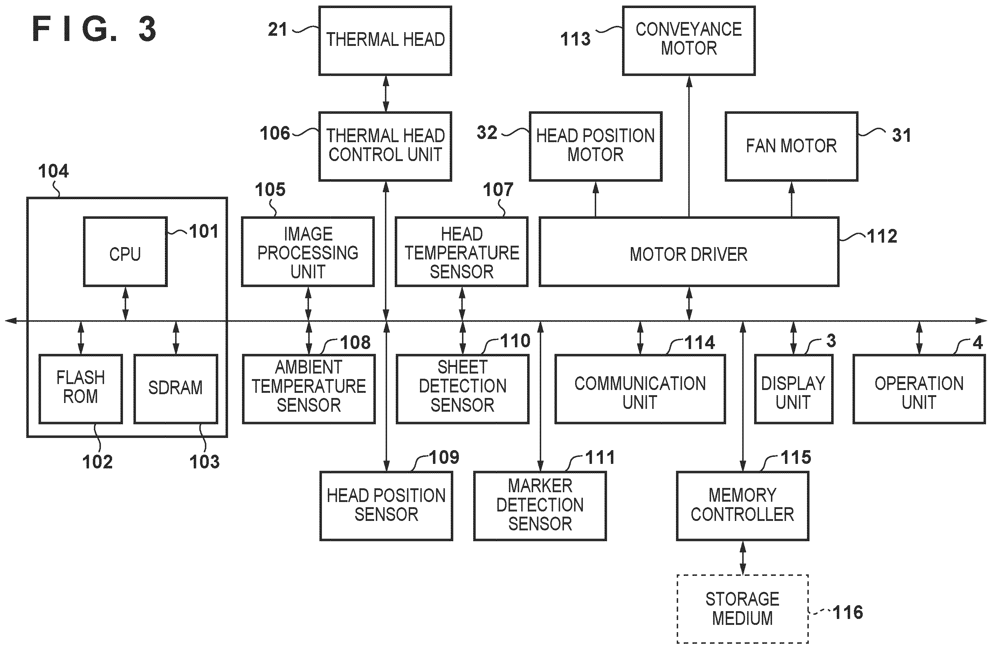

The control configuration of the thermal printer according to the present embodiment will be described next with reference to Fig. 3.

Fig. 3 is a block diagram illustrating the control configuration of the thermal printer according to the present embodiment.

A CPU 101 is a processor that performs control processing and arithmetic processing of the thermal printer 1.

A flash ROM 102 is a nonvolatile memory that stores a control program of the thermal printer 1. The CPU 101 reads out the control program stored in the flash ROM 102 into an SDRAM 103, and executes it, thereby controlling the respective components of the thermal printer 1.

The SDRAM 103 is a volatile memory used as a work area to which constants and variables for the operation of the CPU 101, the program read out from the flash ROM 102, and the like are loaded. The SDRAM 103 temporarily holds a print instruction including image data and print setting information such as an overcoat, which has been received from a host apparatus via a communication unit 114. The host apparatus is an external apparatus such as a digital camera, a smartphone, or a personal computer.

In the present embodiment, the CPU 101, the flash ROM 102, and the SDRAM 103 will be described as a main control unit 104 that controls the overall thermal printer 1.

An image processing unit 105 performs image processing of image data sent from the host apparatus or image data read out from a storage medium 116 to be described later. The image processing includes decompression processing for image data, resize processing corresponding to a recording sheet, and image correction processing. The image processing unit 105 generates color ink image forming data and OC image forming data based on the image data having undergone the image processing.

A thermal head control unit 106 converts the color ink image forming data and the OC image forming data generated by the image processing unit 105 into an electrical signal (image forming signal) and outputs it to the thermal head 21.

The thermal head 21 includes a heating element (resistance element) that converts the electrical signal into thermal energy and transfers the color inks and the OC of the ink ribbon 26 to the recording sheet 18.

A head temperature sensor 107 detects the temperature of the thermal head 21 and outputs the detection result to the main control unit 104. An ambient temperature sensor 108 detects the temperature inside the thermal printer 1 and outputs the detection result to the main control unit 104. The main control unit 104 performs various temperature control operations such as the temperature correction and the weight operation of the thermal head 21 and driving control of the fan motor 31 via a motor driver 112 based on the detection results of the head temperature sensor 107 and the ambient temperature sensor 108.

Furthermore, the thermal printer 1 includes, as sensors that detect information inside the thermal printer 1, a head position sensor 109 that detects the pressing position or the retreat position of the thermal head 21 and a sheet detection sensor 110 that detects a recording sheet. The thermal printer 1 according to the present embodiment is provided with the sheet detection sensors 110 at a plurality of positions, and can thus control the correct position of the recording sheet. In addition, the thermal printer 1 includes a marker detection sensor 111 that detects markers 26e, 26f, 26g, 26h, and 26i for controlling the position of the ink ribbon 26. The main control unit 104 executes the program based on the information detected by each sensor, thereby outputting a control instruction to the motor driver 112 and performing driving control of a head position motor 32 and a conveyance motor 113.

The head position motor 32 is a stepping motor that moves the thermal head 21 to the pressing position at which image forming of the color ink or the OC is performed or the retreat position at which the ink ribbon cassette 25 is replaced or the recording sheet 18 is conveyed.

The conveyance motor 113 is a stepping motor that conveys the recording sheet 18 and the ink ribbon 26.

The communication unit 114 is connected to the host apparatus so as to be capable of mutual communication, and can receive a print instruction including image data and print setting information and transmit/receive various kinds of data.

A memory controller 115 controls the readout of image data from the storage medium 116 attached to the thermal printer 1 and the writing of image data.

The storage medium 116 stores image data. The storage medium 116 is detachable from the thermal printer 1.

The display unit 3 is a liquid crystal panel that displays the image data stored in the storage medium 116 and a menu screen of the thermal printer 1, and an LED that displays the operation state of the thermal printer 1 by light color, lighting, or blinking.

The operation unit 4 includes a touch panel and buttons for accepting a user operation instruction to the thermal printer 1.

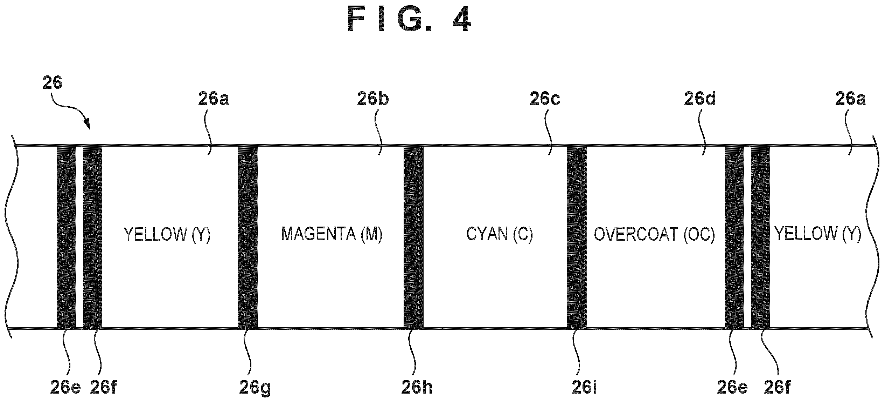

The configuration of the ink ribbon 26 will be described next with reference to Fig. 4. Fig. 4 is a developed view of the ink ribbon 26 according to the present embodiment.

The ink ribbon 26 includes a base film applied with three color ink layers of a yellow (Y) ink layer 26a, a magenta (M) ink layer 26b, and a cyan (C) ink layer 26c. In this way, the plurality of color ink layers are arrayed on the ink ribbon 26. In addition, the base film of the ink ribbon 26 is applied with an overcoat (OC) layer 26d following the ink layers 26a to 26c.

The markers 26e, 26f, 26g, 26h, and 26i for distinguishing each color ink layer and cueing it are applied between the layers, that is, between the C ink layer 26c and the OC layer 26d and between the OC layer 26d and the Y ink layer 26a. The two markers 26e and 26f are provided only before the Y ink layer 26a located at the head of the color ink layers and the OC layer and one of the markers 26g to 26i is provided between the remaining layers.

At the start of image forming, the main control unit 104 controls winding of the ink ribbon 26 to detect the Y ink layer 26a located at the head of the plurality of color inks. After detecting the marker 26e, the main control unit 104 controls to further wind the ink ribbon 26 up to an estimated position at which the second marker 26f is detected. At this time, when the second marker 26f is detected, the main control unit 104 determines the head of the color inks.

Note that the marker detection sensor 111 according to the present embodiment is a reflective infrared sensor. Color inks and an OC agent normally used do not absorb infrared rays having an emission wavelength within a range of about 900 nm to 1,000 nm. Therefore, since the infrared rays are transmitted through an ink sheet regardless of hue, it is possible to detect division between the color ink portion and the marker portion by using an infrared blocking marker. The marker can be formed by containing an infrared blocking material.

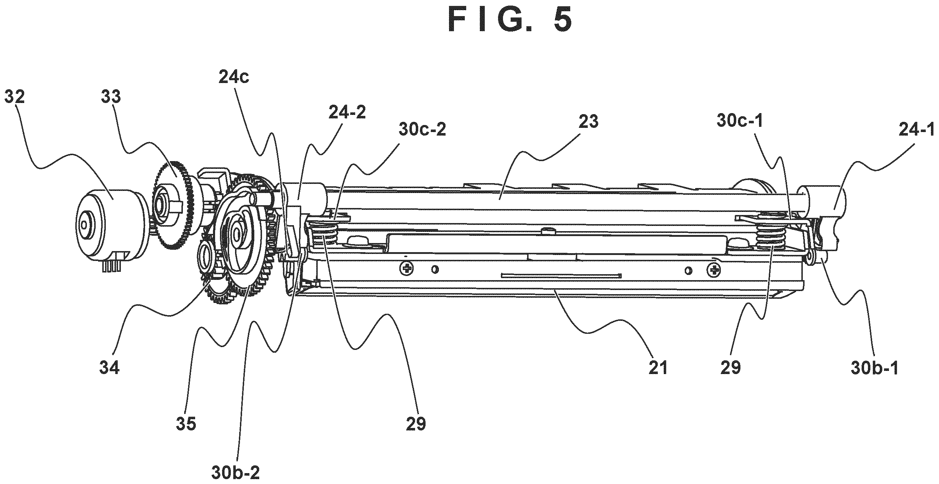

The configuration of the moving mechanism of the thermal head 21 will be described next with reference to Fig. 5.

Fig. 5 is a perspective view of the moving mechanism of the thermal head 21 according to the present embodiment.

The moving mechanism of the thermal head 21 includes the head position motor 32, a first transmission gear 33, a second transmission gear 34, and a head driving gear 35. The head driving gear 35 is made to pivot by the pinion gear of the head position motor 32 via the first transmission gear 33 and the second transmission gear 34. An intermittent gear is provided on a surface (not shown) of the head driving gear 35, and meshes with a gear portion 24c formed in a head driving lever 24-2, thereby making it possible to transmit a pivoting force to the head driving lever 24. When the head driving lever 24-2 pivots, it is fit in the lever pivot shaft 23, and thus a head driving lever 24-1 fit in the lever pivot shaft 23 on the opposite side also pivots. In the example shown in Fig. 5, each of the head driving levers 24-1 and 24-2 has a cam surface of the same shape, and abuts against a pin shape 30b-1 or 30b-2 formed on a side surface of the head arm 30 to push it down. In this case, since spring bearing surfaces 30c-1 and 30c-2 provided in the head arm 30 compress the head pressing springs 29, a reaction force acts in a direction in which the thermal head 21 is pushed down.

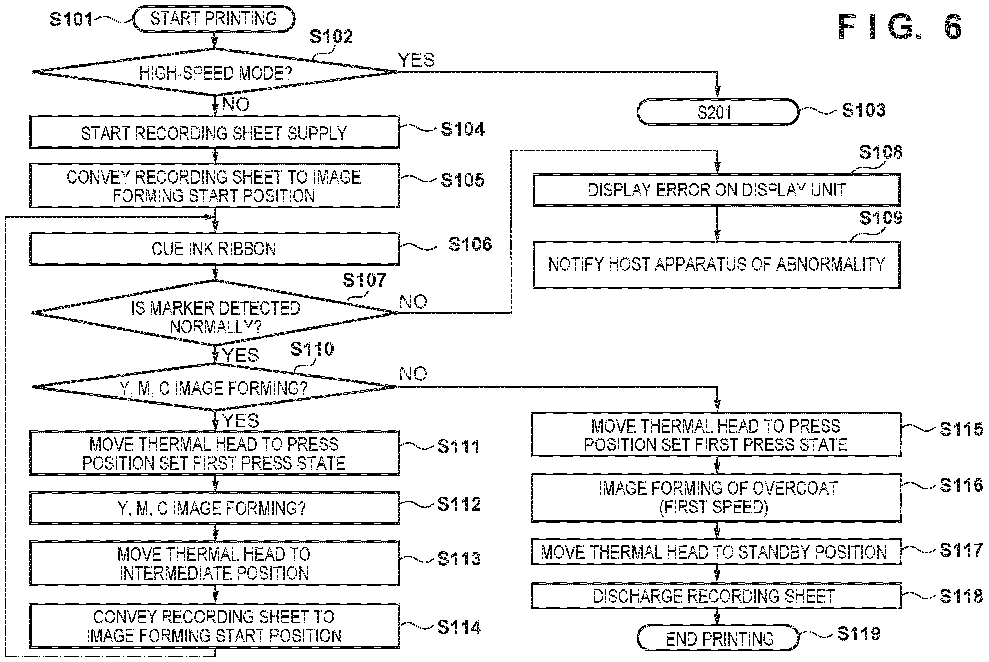

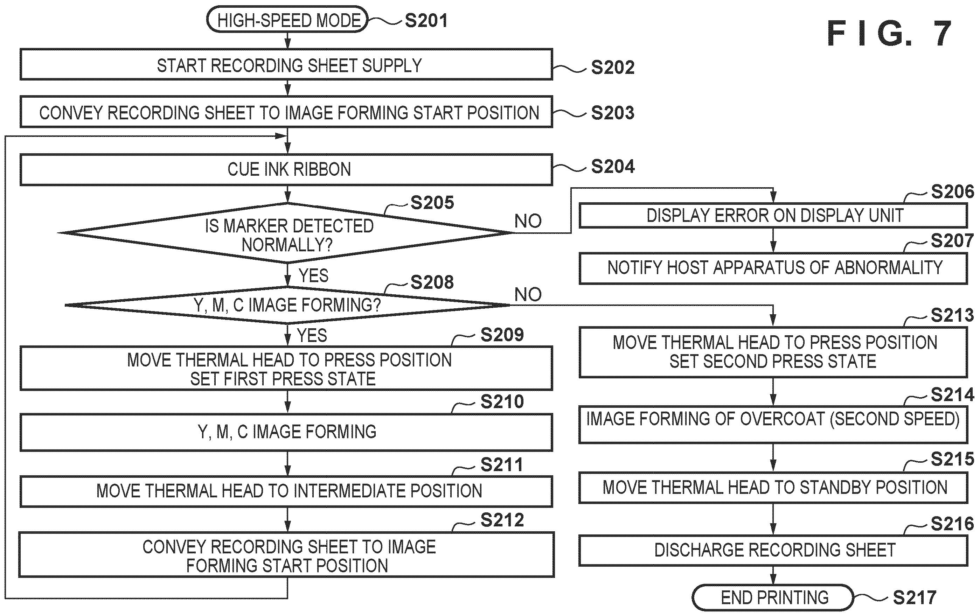

The print processing of the thermal printer according to the present embodiment will be described next with reference to Figs. 6 and 7.

Fig. 6 is a flowchart illustrating print processing in a non-high-speed mode of the thermal printer according to the first embodiment. Fig. 7 is a flowchart illustrating print processing in a high-speed mode of the thermal printer according to the first embodiment.

The processing shown in each of Figs. 6 and 7 is implemented when the CPU 101 executes the control program stored in the flash ROM 102 to control the respective components of the thermal printer 1. In the following description, assume that the main control unit 104 is an operation entity.

Step S101: When the user prepares for image forming by attaching the ink ribbon cassette 25 and the sheet tray 6 to the thermal printer 1, and then operates the operation unit 4 to issue a print instruction, the main control unit 104 starts print processing.

Step S102: The main control unit 104 determines whether the print instruction is to perform print processing in the high-speed mode or print processing in the non-high-speed mode. When the main control unit 104 determines that the print instruction is to perform print processing in the high-speed mode, the process shifts to print processing in the high-speed mode in step S201 of Fig. 7. When the main control unit 104 determines that the print instruction is to perform print processing in the non-high-speed mode, the process advances to step S104 to start the print processing in the non-high-speed mode.

Step S104: The main control unit 104 supplies the recording sheet 18 from the sheet tray 6 into the thermal printer 1. At this time, the lift plate 8 is lifted up by a driving source (not shown) to make the recording sheet 18 stored in the sheet tray 6 abut against the supply/discharge roller 15. Then, the supply/discharge roller 15 is driven to rotate by using the conveyance motor 113 as a driving source, thereby supplying the recording sheet 18 from the sheet tray 6.

Step S105: The recording sheet 18 supplied from the sheet tray 6 is guided by the sheet guide 17 to a position at which the recording sheet 18 is nipped by the sheet conveyance roller 19 and the pinch roller 20. Then, the recording sheet 18 is conveyed into the thermal printer 1, and conveyed to an image forming start position.

Step S106: The main control unit 104 drives the thermal head 21 to an intermediate position close to the platen roller 22. When the thermal head 21 moves, a ribbon driving mechanism that drives the winding bobbin 28 of the ink ribbon 26 to rotate is switched to be drivable by a cam (not shown). Then, the main control unit 104 drives the conveyance motor 113 to rotate the winding bobbin 28 of the ink ribbon cassette 25, and pulls out the ink ribbon 26 from the supply bobbin 27, thereby cueing the ink ribbon 26.

Step S107: When the marker detection sensor 111 sequentially detects the markers 26e and 26f of the ink ribbon 26 shown in Fig. 4 while winding the ink ribbon 26, the image forming start position of the Y ink layer 26a of the ink ribbon 26 is located at a position facing the thermal head 21. The main control unit 104 stops the winding operation of the ink ribbon 26 at the time of detecting the marker 26f.

Step S108: When only one marker can be detected or no marker can be detected within a predetermined time at the time of cueing a Y ink image forming position, the main control unit 104 determines that the ink ribbon 26 is abnormal and performs blinking display representing an error on the display unit 3.

Step S109: When the host apparatus is connected, the main control unit 104 notifies the host apparatus via the communication unit 114 that the ink ribbon 26 is abnormal.

Step S110: The main control unit 104 determines whether to perform image forming of the color inks or the OC. When it is determined to perform image forming of the color inks, the process advances to step S111. When it is determined to perform image forming of the OC, the process advances to step S115.

Step S111: The main control unit 104 starts image forming of the Y ink. When the head position motor 32 is driven to cause the head arm 30 to pivot, the thermal head 21 moves to the pressing position shown in Fig. 1. The thermal head 21 and the platen roller 22 press the ink ribbon 26 and the recording sheet 18. The pressing state of the thermal head 21 at this time is set as the first pressing state.

Step S112: While conveying the recording sheet 18 in the direction of the sub-roller 16 by the sheet conveyance roller 19, the main control unit 104 causes the heating element of the thermal head 21 to generate heat by an image forming signal provided from the thermal head control unit 106, and transfers the Y ink layer 26a of the ink ribbon 26 to the recording sheet 18, thereby performing image forming of the Y ink.

At this time, the winding bobbin 28 is driven to rotate by using the conveyance motor 113 as a driving source, and the ink ribbon 26 is conveyed at the same speed as that of the recording sheet 18 by the action of a torque limiter (not shown).

Step S113: To perform next image forming of the M ink after completion of the image forming of the Y ink, the main control unit 104 pivots the head arm 30 to cancel the pressing between the thermal head 21 and the platen roller 22, and stops the thermal head at the intermediate position between the pressing position and the retreat position.

Step S114: The main control unit 104 performs the return operation of the recording sheet 18 to convey the recording sheet 18 to the image forming start position by the sheet conveyance roller 19.

Steps S106 and S107: To start image forming of the M ink, the main control unit 104 rotates the winding bobbin 28 to pull out the ink ribbon 26 from the supply bobbin 27 so that the image forming start position of the M ink layer 26b of the ink ribbon 26 is located at a position facing the thermal head 21. Winding of the ink ribbon 26 is started, and when the marker detection sensor 111 detects the marker 26g at the head of the M ink layer 26b, winding of the ink ribbon 26 is stopped.

Steps S110, S111, and S112: The main control unit 104 presses the ink ribbon 26 and the recording sheet 18 against the platen roller 22 by the thermal head 21, and starts image forming of the M ink, similar to image forming of the Y ink.

After that, the operations in steps S106 to S114 are repeated to perform image forming of the C ink.

Step S115: When image forming of the OC is performed, the pressing state of the ink ribbon 26 and the recording sheet 18 by the thermal head 21 and the platen roller 22 is set to the first pressing state, similar to the color ink transfer.

Step S116: The main control unit 104 performs image forming of the OC at the first speed. Note that the processing speed during the OC transfer is, for example, a time required to transfer OC image forming data to the recording sheet 18.

Steps S117 and S118: After the end of the image forming of the OC, in order to discharge the recording sheet 18, the main control unit 104 drives the supply/discharge roller 15 to rotate to nip the recording sheet 18 by the supply/discharge roller 15 and the sub-roller 16, thereby discharging the recording sheet 18 outside the thermal printer 1.

Step S119: The main control unit 104 ends the print processing in the non-high-speed mode.

When the print instruction for the high-speed mode is received in step S102, the main control unit 104 starts the print processing in the high-speed mode in step S201 shown in Fig. 7.

In the print processing in the high-speed mode shown in Fig. 7, when image forming of the color ink is performed in step S210, image forming is performed at the second speed higher than the first speed in the non-high-speed mode. An operation of performing image forming of the color ink is the same as in the non-high-speed mode in Fig. 6.

Step S213: When image forming of the OC is performed in step S208, the main control unit 104 moves the thermal head 21 to the pressing position, and sets the pressing state of the ink ribbon 26 and the recording sheet 18 by the thermal head 21 and the platen roller 22 to the second pressing state, unlike the non-high-speed mode. In the second pressing state, since the pressing force is smaller than in the first pressing state, the frictional resistance lowers, thereby making it possible to implement a condition for preventing a defect such as abnormal noise or adhesion even when the processing speed during the OC transfer is increased.

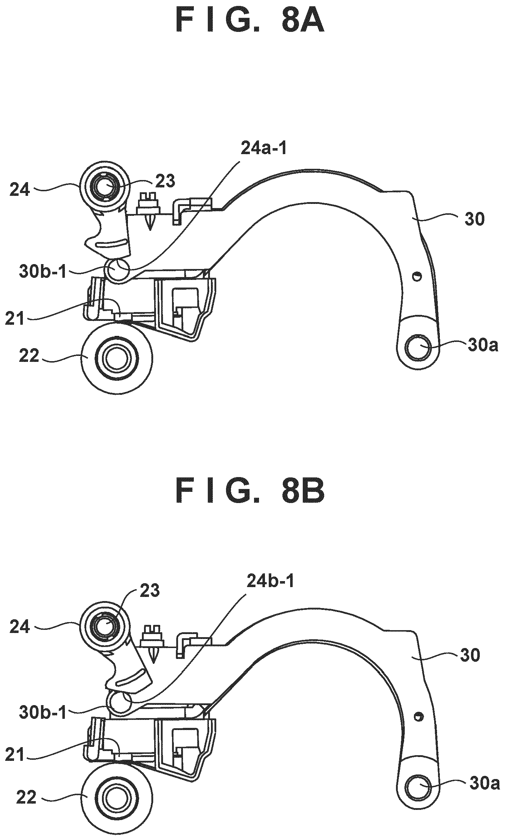

Figs. 8A and 8B are side views respectively showing the moving mechanism of the thermal head 21 in first pressing state A and second pressing state B.

In the first pressing state shown in Fig. 8A, a first cam surface 24a-1 of the cam surface formed on the side surface of the head driving lever 24, which is at a position having a largest distance from the pivot center, abuts against the pin shape 30b-1 provided on the side surface of the head arm 30, thereby pushing down the thermal head 21.

In the second pressing state shown in Fig. 8B, a second cam surface 24b-1 having a shorter distance from the pivot center than the first cam surface 24a-1 abuts against the pin shape 30b-1 provided on the side surface of the head arm 30. Then, the thermal head 21 is pushed down by a force smaller than in the first pressing state. The first pressing state and the second pressing state are switched by controlling the rotation amount of the head driving lever 24.

Step S214: After setting the pressing state to the second pressing state, the main control unit 104 performs image forming of the OC at the second speed. The second speed is higher than the first speed during the OC transfer in the non-high-speed mode in step S116 of Fig. 6.

Processes in steps S215 to S217 are the same as those in steps S117 to S119 in the non-high-speed mode in step S116 of Fig. 6.

According to the above-described first embodiment, it is possible to set, to optimum conditions, the processing speed and the pressing state of the ink ribbon 26 and the recording sheet 18 during the color ink transfer and during the overcoat transfer, and to speed up the print processing without bothering the user. In addition, even when the processing speed during the overcoat transfer is increased, it is possible to prevent a defect such as abnormal noise or adhesion.

### [SECOND EMBODIMENT]

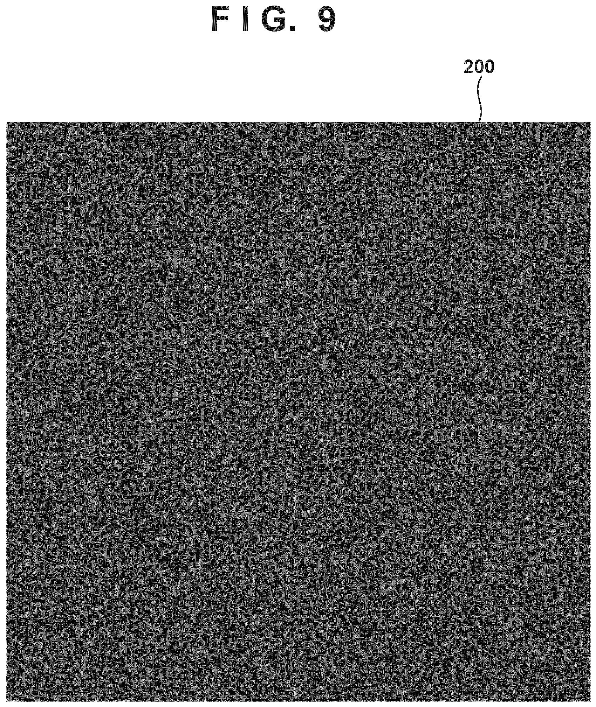

A second embodiment will be described next with reference to Figs. 9 to 11.

In addition to a non-pattern OC mode (first OC mode) of performing image forming of a glossy OC by uniformly applying a first heat amount to the overall OC layer of an ink ribbon 26, a thermal printer 1 according to the second embodiment has a non-pattern OC mode (second OC mode) of performing image forming of the OC for forming, in the OC layer of the ink ribbon 26, a portion applied with the first heat amount and a portion applied with a second heat amount larger than the first heat amount.

Fig. 9 exemplifies a semi-glossy pattern 200 as one OC pattern formed in a pattern OC mode according to the present embodiment.

In the semi-glossy pattern 200 shown in Fig. 9, a light color portion is applied with the first heat amount, and is highly glossy after image forming of the OC. A dark color portion is applied with the second heat amount to roughen the OC surface, and is low glossy after image forming of the OC. In the pattern OC mode, the glossiness of the overall OC is lower than the glossiness in the non-pattern OC mode, and the user can enjoy texture called semi-gloss.

The mechanical configuration and the control configuration of the thermal printer according to the second embodiment are the same as those shown in Figs. 1 to 3 in the first embodiment.

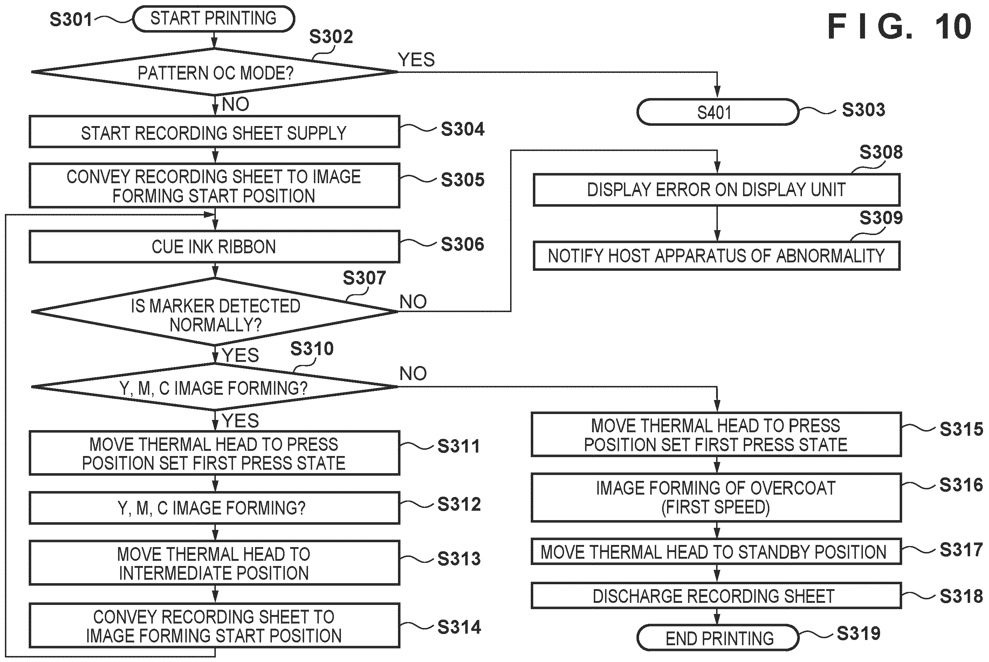

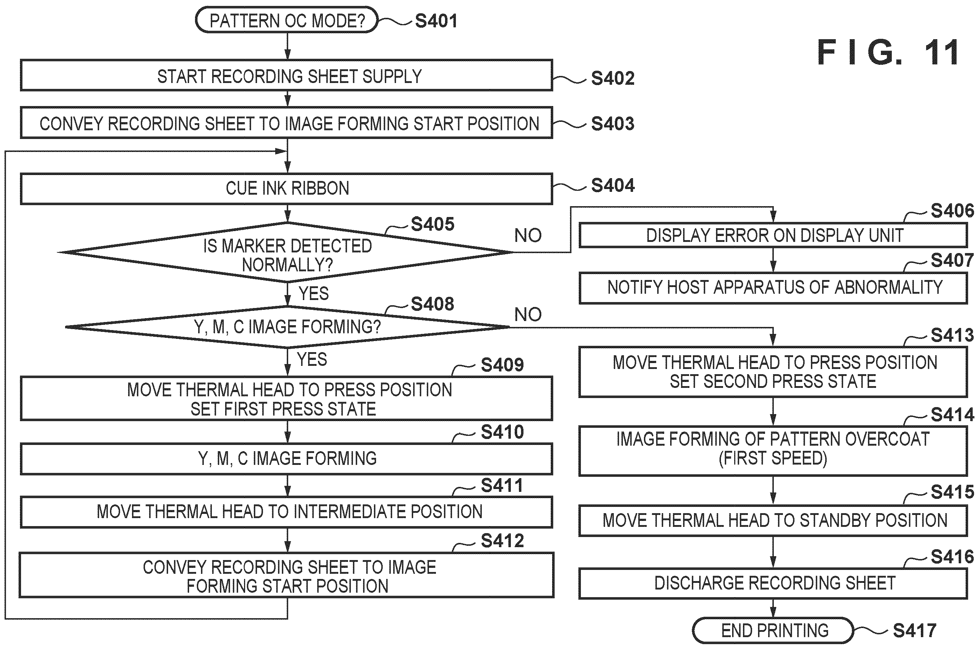

Fig. 10 is a flowchart illustrating print processing in the non-pattern OC mode of the thermal printer according to the second embodiment. Fig. 11 is a flowchart illustrating print processing in the pattern OC mode of the thermal printer according to the second embodiment.

The print processing of the thermal printer according to the second embodiment will be described with reference to Figs. 10 and 11.

Step S301: Similar to step S101, a main control unit 104 receives a print instruction from the user, and starts print processing.

Step S302: The main control unit 104 determines whether the print instruction is to perform print processing in the pattern OC mode or print processing in the non-pattern OC mode. When the main control unit 104 determines that the print instruction is to perform print processing in the pattern OC mode, the process shifts to print processing in the pattern OC mode in step S401 of Fig. 11. When the main control unit 104 determines that the print instruction is to perform print processing in the non-pattern OC mode, the process advances to step S304 to start the print processing in the non-pattern OC mode.

Steps S304 to S319 are the same as steps S104 to S119 of Fig. 6 in the first embodiment. Note that when a thermal head is moved to a pressing position in step S315, the first pressing state is set, similar to the color ink transfer. Image forming of the OC in step S316 is performed in the first OC mode, and is performed at the first speed.

When the main control unit 104 receives the print instruction for the pattern OC mode in step S302, the print processing in the pattern OC mode in step S401 shown Fig. 11 is started.

In the print processing in the pattern OC mode shown in Fig. 11, steps S402 to S412 are the same as steps S304 to S314 of Fig. 10.

Step S413: When image forming of the OC is performed in step S408, the main control unit 104 moves a thermal head 21 to a pressing position, and sets the pressing state of the ink ribbon 26 and a recording sheet 18 by the thermal head 21 and a platen roller 22 to the second pressing state, unlike the non-pattern OC mode. In the second pressing state, since the pressing force is smaller than in the first pressing state, the frictional resistance lowers even during the pattern OC transfer in which the frictional resistance locally increases, thereby making it possible to implement a condition for preventing a defect such as abnormal noise or adhesion during the OC transfer. To prevent the defect, it is necessary to make the processing speed in the pattern OC mode lower than the processing speed in the first OC mode. However, in the present embodiment, since the thermal head 21 is set in the second pressing state in the pattern OC mode in step S413, it is possible to perform image forming of the OC at the same speed as in the non-pattern OC mode.

Steps S414 to S417 are the same as steps S316 to S319 of Fig. 10.

Note that in the second embodiment, the processing speed in the pattern OC mode is set to the same processing speed as in the non-pattern OC mode. However, the mode can be switched to the non-high-speed mode or the high-speed mode in the pattern OC mode, similar to the first embodiment.

According to the above-described second embodiment, it is possible to set, to optimum conditions, the processing speed and the pressing state of the ink ribbon 26 and the recording sheet 18 during the non-pattern OC transfer and during the pattern OC transfer, and to speed up the print processing without bothering the user. In addition, even when the processing speed during the non-pattern OC transfer and that during the pattern OC transfer are made the same, it is possible to prevent a defect such as abnormal noise or adhesion.

Note that in each of the first and second embodiments, the print processing is speeded up by setting the pressing state of the thermal head 21 to an optimum condition for image forming of the OC by the moving mechanism of the thermal head 21. However, for example, it is possible to obtain the same effect by setting an optimum condition for image forming of the OC by changing the pressing position with respect to the scanning direction (line direction) of the thermal head 21 or by increasing/decreasing pressing points.

In each of the first and second embodiments, as a method of variably controlling the pressing state of the thermal head 21 and the platen roller 22, a configuration of relatively moving the thermal head 21 is adopted. However, it is possible to obtain the same effect even by a configuration of relatively moving the platen roller 22.

### [OTHER EMBODIMENTS]

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A printing apparatus (1) that thermally transfers color ink (26a, 26b, 27c) and an overcoat (26d) to a recording sheet (18), comprising:
control means (104) configured to perform print processing (S101 - S119) of transferring the color ink and the overcoat to the recording sheet by a thermal head (21) and an ink ribbon (26),
wherein the control means changes a pressing force for pressing the ink ribbon and the recording sheet during the color ink transfer and during the overcoat transfer in the print processing, and controls a processing speed during the color ink transfer and during the overcoat transfer in the print processing.

2. The apparatus according to claim 1, wherein
the control means can switch between a first pressing state in which the pressing force during the overcoat transfer is the same as the pressing force during the color ink transfer and a second pressing state in which the pressing force is smaller than in the first pressing state.

3. The apparatus according to claim 2, wherein
the control means can set the processing speed during the overcoat transfer to one of a first speed and a second speed higher than the first speed.

4. The apparatus according to claim 3, wherein
the print processing includes a first mode of transferring the overcoat at the first speed and a second mode of transferring the overcoat at a speed higher than the first speed,
the control means sets, to the first pressing state, the pressing force during the overcoat transfer in the first mode, and sets the processing speed during the overcoat transfer to the first speed, and
the control means sets, to the second pressing state, the pressing force during the overcoat transfer in the second mode, and sets the processing speed during the overcoat transfer to the second speed.

5. The apparatus according to claim 3, wherein
the print processing includes a first mode of transferring the overcoat by applying a first heat amount to the overall ink ribbon and a second mode of transferring the overcoat by forming, in the ink ribbon, a portion applied with the first heat amount and a portion applied with a second heat amount larger than the first heat amount, and
the control means sets the first pressing state in the first mode and sets the second pressing state in the second mode.

6. The apparatus according to claim 5, wherein
the control means makes the processing speed in the first mode and the processing speed in the second mode the same.

7. The apparatus according to any one of claims 2 to 5, further comprising:
moving means (30, 32) configured to relatively move the thermal head and a platen roller (22) to a pressing position at which the ink ribbon and the recording sheet are pressed by the thermal head and the platen roller and a retreat position at which the pressing between the ink ribbon and the recording sheet by the thermal head and the platen roller is canceled,
wherein the control means switches between the first pressing state and the second pressing state by the moving means.

8. The apparatus according to claim 7, wherein
the control means switches between the first pressing state and the second pressing state by changing the pressing position of the thermal head by the moving means.

9. The apparatus according to claim 8, wherein
the moving means changes a pressing point at a pressing position of the thermal head.

10. The apparatus according to any one of claims 1 to 9, wherein
in the ink ribbon, the color ink and the overcoat are sequentially formed, and
the overcoat is transferred onto an image to which the color ink has been transferred.

11. A control method of a printing apparatus (1) that thermally transfers color ink (26a, 26b, 26c) and an overcoat (26d) to a recording sheet (18), the control method comprising:
a step of performing (S101 - S119) print processing of transferring the color ink and the overcoat to the recording sheet by a thermal head (21) and an ink ribbon (26),
wherein in the print processing, a pressing force for pressing the ink ribbon and the recording sheet is changed during the color ink transfer and during the overcoat transfer in the print processing, and a processing speed is controlled during the color ink transfer and during the overcoat transfer in the print processing.

12. A computer-readable storage medium storing a program that causes a computer to function as the printing apparatus according to any one of claims 1 to 10.

13. A program that causes a computer to function as the printing apparatus according to any one of claims 1 to 10.
